(19) **Europäisches Patentamt**
**European Patent Office**
**Office européen des brevets**

(11) **EP 4 323 169 B1**

(12) **EUROPEAN PATENT SPECIFICATION**

(45) Date of publication and mention
of the grant of the patent:
**26.03.2025 Bulletin 2025/13**

(21) Application number: **21721616.7**

(22) Date of filing: **16.04.2021**

(51) International Patent Classification (IPC):
**B29C 48/08** (2019.01)   **B29C 48/31** (2019.01)
**B29C 48/92** (2019.01)

(52) Cooperative Patent Classification (CPC):
**B29C 48/313; B29C 48/08; B29C 48/92;**
B29C 2948/92647; B29C 2948/92942

(86) International application number:
**PCT/IB2021/053172**

(87) International publication number:
**WO 2022/219379 (20.10.2022 Gazette 2022/42)**

(54) **SLOT DIE ADJUSTMENT WITH HYBRID CONTROLS**

SCHLITZDÜSENEINSTELLUNG MIT HYBRIDSTEUERUNGEN

RÉGLAGE DE FILIÈRE PLATE AVEC COMMANDES HYBRIDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.02.2024 Bulletin 2024/08**

(73) Proprietor: **3M Innovative Properties Company**
**Saint Paul, Minnesota 55133-3427 (US)**

(72) Inventors:
• **YAPEL, Robert A.**
**Saint Paul, Minnesota 55133-3427 (US)**
• **ANTILA, Garth V.**
**Saint Paul, Minnesota 55133-3427 (US)**
• **CPREK, Leonard D.**
**Saint Paul, Minnesota 55133-3427 (US)**
• **KOSTUCH, Gregory D.**
**Saint Paul, Minnesota 55133-3427 (US)**

• **LOUKUSA, Pentti K.**
**Saint Paul, Minnesota 55133-3427 (US)**
• **NGUYEN, David D.**
**Saint Paul, Minnesota 55133-3427 (US)**
• **REHKAMP, Brandon A.**
**Saint Paul, Minnesota 55133-3427 (US)**
• **SECOR, Robert B.**
**Saint Paul, Minnesota 55133-3427 (US)**
• **TAYLOR, Charles W.**
**Saint Paul, Minnesota 55133-3427 (US)**
• **THOMAS, Paul C.**
**Saint Paul, Minnesota 55133-3427 (US)**

(74) Representative: **Vossius & Partner**
**Patentanwälte Rechtsanwälte mbB**
**Siebertstraße 4**
**81675 München (DE)**

(56) References cited:
**JP-A- H1 058 518       US-A- 5 626 888**
**US-A1- 2019 091 913    US-B1- 9 302 420**

**Description**

<u>Field of the Invention</u>

Provided are slot dies useful for continuous manufacture of a product, along with related assemblies, systems, and methods thereof.

<u>Background</u>

Industrial manufacturers commonly use slot dies for polymer processing. Slot dies can be used for coatings, where a liquid material is extruded onto a moving flexible substrate, such as a backing or release liner. The liquid material can be a polymeric melt or a reactive monomeric mixture. When material is applied to a substrate, the process is generally referred to as extrusion coating. In other cases, the extruded material can form a free-standing film directly without need for a backing.

There are many variations in the way slot die extrusions are carried out. As one example, coating materials can be at ambient temperature or an elevated temperature. When a coating material temperature is elevated to ensure that the feed stock material is melted or liquefied for processing, this is often referred to as hot melt coating. A extrudate can include solvent diluents. Solvents can be water, organic solvents, or any suitable fluid that dissolves or disperses components of a coating. Solvents are typically removed in subsequent processing such as by drying. A coating can include single or multiple layers, and some slot dies may be used to apply multiple layers simultaneously. A coating can be a continuous coating across the width of the die or instead include forming strips, each strip extending across only a portion of the width of the die and being separated from adjacent strips.

Generally, slot dies include a pair of opposing die lips that form an applicator slot. The width of the applicator slot can extend about the width of a moving web or the width of a roller that receives the extruded product, such as a film. As used herein, with respect to slot dies and components of slot dies, "a width" refers to the cross-web dimension of a slot die and its components. Thickness of the extruded web is generally adjusted by altering the shape of one or both die lips, or by adjusting a choker bar located upstream from the die lips.

Technology to adjust cross-web profile on film extrusion dies or extrusion coating dies generally involve one of two methods. First, a die lip or choker bar can be adjusted manually using differential bolts that use a screw mechanism to make tiny adjustments to the shape of the die lip or choker bar. Second, the die lip or choker bar might be adjusted using thermally assisted bolts that can change in length with temperature and can engage the die lip or choker to make even finer adjustments. Some of these processes are described in co-pending International Patent Application Nos. PCT/IB2020/061685 (Yapel, et al.), PCT/IB2020/061687 (Yapel, et al.), and PCT/IB2020/061688 (Secor, et al.), and U.S. Provisional Patent Application No. 63/122,996 (Secor, et al.), all filed on December 9, 2020. US patent application US 5 626 888 A (Saenze et al.) discloses another lip adjustment method.

<u>Summary</u>

Cross-web control spatial resolution is a particular concern in the control of dies. The spatial resolution of the die slot limits the resolution of controls over extruded web thickness and minimize cross-web variability. This is of particular concern in tentered film operations, such as used for optical-grade films. In a tentered film operation, the film is extruded and then stretched in a transverse direction, which effects the resolution of the die by the stretch factor. If the film is stretched transversely by a factor of 6, then a 1 centimeter actuator/bolt spacing on the die can only control to a 6 centimeter width of the final film. Transverse stretching can be a separate process step in a sequence of steps that include extrusion (i.e., casting), length orientation, transverse orientation, and/or a combined biaxial stretching of the film.

Advantageously, the provided methods use a hybrid control process that coordinates the movement of two different actuators to enable a substantial enhancement in cross-web spatial resolution. In some embodiments, these hybrid controls allow use of the existing gauging and mapping back to the die in a tentered film process. Conveniently, hybrid controls can be used to operate the die while using existing gauging systems as already configured on manufacturing lines. Overall, these improved systems and methods add greater precision, consistency, and knowledge of the die slot.

In a first aspect, a method of adjusting a slot die is provided. The slot die comprises: an applicator slot extending across a width of the slot die, the applicator slot in fluid communication with a fluid flow path through the slot die; an adjustment mechanism comprising a slot die surface; and a plurality of primary actuators spaced along the width of the slot die, wherein each primary actuator is operatively coupled to one or more secondary actuators, and each secondary actuator is operatively coupled to the adjustment mechanism to adjust a cross-sectional height of fluid flow path at its respective location to provide a local adjustment of fluid flow through the applicator slot. The method comprises: determining a target slot height profile; predicting, with a controller, a set of primary actuator settings and a set of secondary actuator settings based on the target slot height profile; and separately positioning each primary and secondary actuator according to the predicted set of primary and secondary actuator settings to adjust the slot die.

In a second aspect, a system is provided, comprising: a slot die, wherein the slot die comprises: an applicator slot extending across a width of the slot die, wherein the applicator slot is in fluid communication with a fluid flow path through the slot die; an adjustment mechanism comprising a slot die surface for adjusting a cross-sectional height of fluid flow path through the applicator slot; and a plurality of primary actuators spaced along the width of the slot die surface, wherein each primary actuator is operatively coupled to one or more secondary actuators, and each secondary actuator is operatively coupled to the adjustment mechanism to adjust a cross-sectional height of fluid flow path at its respective location to provide a local adjustment of fluid flow through the applicator slot; and a controller capable of setting a position of each primary and each secondary actuator independently.

Brief Description of the Drawings

FIG. 1 is a schematic diagram showing a manufacturing line incorporating a slot die according to an exemplary embodiment.

FIG. 2 is an perspective view of the slot die of FIG. 1.

FIG. 3 is a side cross-sectional view of the slot die of FIGS. 1 and 2, in which primary and secondary actuators are provided to adjust a height of a fluid flow path at a given location.

FIG. 4 is a perspective view showing a front end portion of a secondary actuator of the slot die of FIGS. 1-3.

FIGS. 5-7 are block diagrams showing various control loops that may be used to operate the slot die of FIGS. 1-4.

FIGS. 8A and 8B are top views showing configurations of primary and secondary actuators in the slot die of FIG. 1-4 in a pre-adjusted and post-adjusted state.

FIG. 9 is a block diagram showing another control loop that may be used to operate the slot die of FIGS. 1-4.

FIG. 10 is a plot showing a temperature profile for an array of secondary actuators next to a parallel plot showing a power input profile for the same secondary actuators.

FIGS. 11 and 12 are plots showing average and $\pm 2s$ variability limits of cross-web thickness profile for an extruded web made using two different methods of operating a slot die.

Repeated use of reference characters in the specification and drawings is intended to represent the same or analogous features or elements of the disclosure. It should be understood that numerous other modifications and embodiments can be devised by those skilled in the art, which fall within the scope and spirit of the principles of the disclosure. The figures may not be drawn to scale.

Detailed Description

As used herein, the terms "preferred" and "preferably" refer to embodiments described herein that can afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the invention.

As used herein and in the appended claims, the singular forms "a," "an," and "the" include plural referents unless the context clearly dictates otherwise. Thus, for example, reference to "a" or "the" component may include one or more of the components and equivalents thereof known to those skilled in the art. Further, the term "and/or" means one or all of the listed elements or a combination of any two or more of the listed elements.

It is noted that the term "comprises", and variations thereof do not have a limiting meaning where these terms appear in the accompanying description. Moreover, "a," "an," "the," "at least one," and "one or more" are used interchangeably herein. Relative terms such as left, right, forward, rearward, top, bottom, side, upper, lower, horizontal, vertical, and the like may be used herein and, if so, are from the perspective observed in the particular drawing. These terms are used only to simplify the description, however, and not to limit the scope of the invention in any way.

Reference throughout this specification to "one embodiment," "certain embodiments," "one or more embodiments" or "an embodiment" means that a particular feature, structure, material, or characteristic described relating to the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention. Where applicable, trade designations are set out in all uppercase letters.

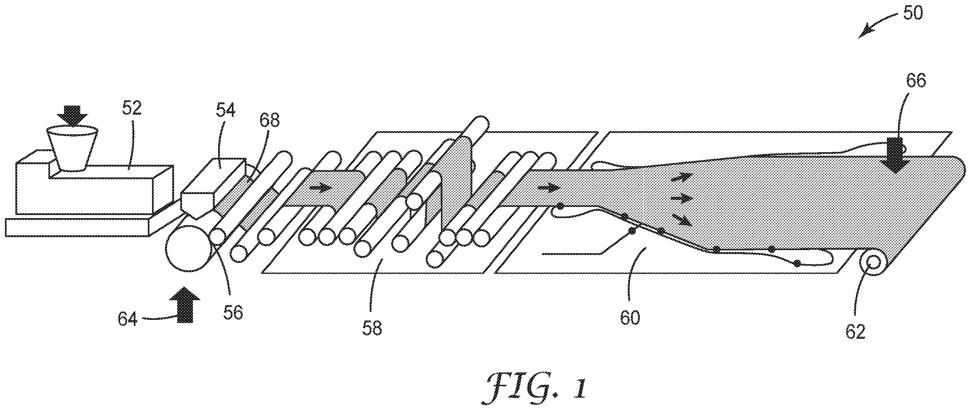

FIG. 1 shows a manufacturing process line according to an exemplary embodiment hereinafter denoted by the numeral 50. The process line 50 includes various polymer processing stages that occur in sequence. In the following order, these stages are conducted by an extruder 52, slot die 54, casting roll assembly 56, machine-direction stretcher 58, transverse-direction stretcher 60, and winder 62. These elements of process line 50 are described in more detail below.

The extruder 52 generally uses a single or twin-screw configuration within a heated barrel and can accept a polymeric feed stock in the form of pellets or powder. This feed stock is melted and mixed by the extruder 52 and discharged through the slot die 54 to provide an extruded web 68. To assist in this process, a melt pump or metering pump could be used. The slot die 54 need not be particularly limited, and can be for example a film slot die, extrusion die, a multi-layer slot die, a hot melt extrusion coating die, a drop die, a rotary rod die, an adhesive slot die, a solvent coating slot die, a water-based coating die, a slot fed knife die, or a knife coater.

After exiting the slot die 54, the web 68 is directly disposed onto a cast roll within the casting roll assembly 56, and then threaded through the machine-direction stretcher 58 that uniaxially stretches the web 68 along its down-web direction. After being stretched along this dimension, the web 68 is directed through the transverse-direction stretcher 60, where the edges of the web are gripped with clamps and the web stretched along its cross-web direction. Once fully stretched to a desired extent along both directions, the web 68 can be finally consolidated into a roll via the winder 62 as shown. Optionally, an edge trimming step is carried out to provide a film of uniform width before it is wound onto a core.

In this exemplary process, there are various locations where the thickness of the web 68 can be measured, known as gauging locations. In FIG. 1, the extruded web 68 is conveyed from the die 54 to a first gauging location 64, and then to a second gauging location 66 before being wound into a roll by winder 62. The first location 64 captures web thickness information soon after the extruded web 68 is quenched on the initial cast roll. The second location 66 captures this information after completion of the second stretching step is carried out by the transverse-direction stretcher 60 and before the web 68 is taken up by the winder 62. Optionally, the location 66 can be after an edge trimming step is carried out to impart a uniform width to the web 68. If desired, it is also possible for thickness measurement to be taken at an intermediate point, such as between the machine-direction stretcher 58 and the transverse-direction stretcher 60. Web thickness is directly related to coating weight, and the two shall be regarded similarly for the purposes of this disclosure.

Gauging of the extruded web 68 can be achieved using any method known in the art. One useful thickness measurement technique uses a beta gauge. A beta gauge measures the normalized mass of a given web by transmitting through the web radiation emitted from a radioisotope source (e.g., based on promethium, krypton, or strontium) and detecting the resulting attenuation of beta particles. The measurement footprint of a beta gauge is small, so profile measurements are made at various locations along a zig-zag pattern across the width of the web. These measurements can then be tracked over time to account for time differences amongst measurements taken along the web. Even after the effects of process conditions have stabilized, a complete profile measurement can require the averaging of several scans (commonly, six scans or more) to average out machine direction variability.

Alternative gauging methods are also available, including those based on UV fluorescence, infrared absorption, interferometry, direct thickness measurement such as laser triangulation, reflective methods such as gamma backscattering, and capacitance-based sensing. Some of these methods are capable of capturing a web thickness profile over the entire width of the web at one time. It was determined that applying certain workflows described herein while measuring the coating thickness along its entire width at one time can provide a 4-fold to 12-fold improvement in cycle time compared to a workflow that uses a conventional scan-based gauging method.

While not explicitly shown here, other process lines are also possible. Some of these do not include one or both of the machine-direction stretcher 58 or transverse-direction stretcher 60. In other embodiments, machine-direction stretching and transverse-direction stretching are carried out in the same step. In further alternative embodiments, the extruder 52 disposes the still-molten extruded web onto an embossed surface to provide a textured surface. The extruded web can also be disposed onto a pre-existing film as they pass between nip rollers within the casting roll assembly 56.

Process lines may include any of a number of additional process stations. For example, ovens for drying or other stations could be provided to cure an extruded web that includes a curable composition. Further process steps can include surface-treatment stations to provide a corona-treated or flame-treated surface on the extruded web, or inspection stations to illuminate any quality issues. It is to be understood that all these aforementioned variants are within the scope of the provided disclosure.

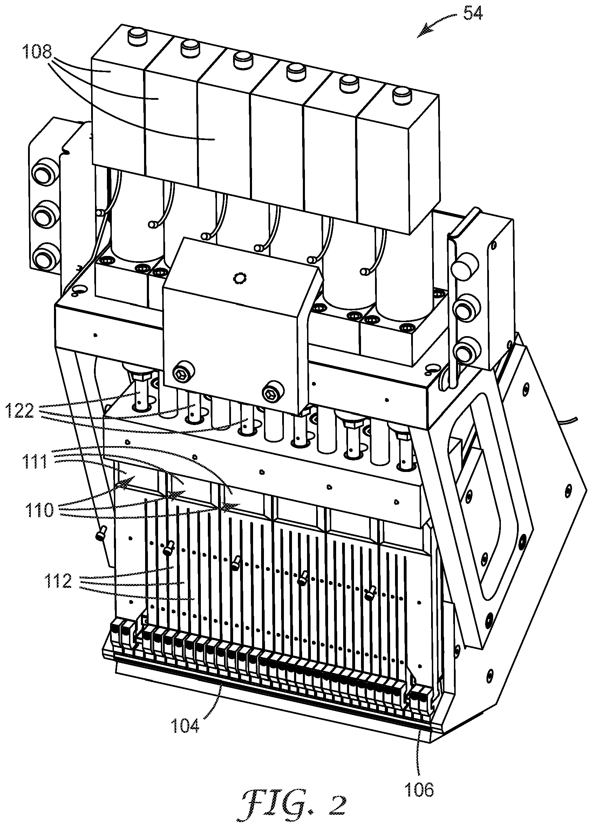

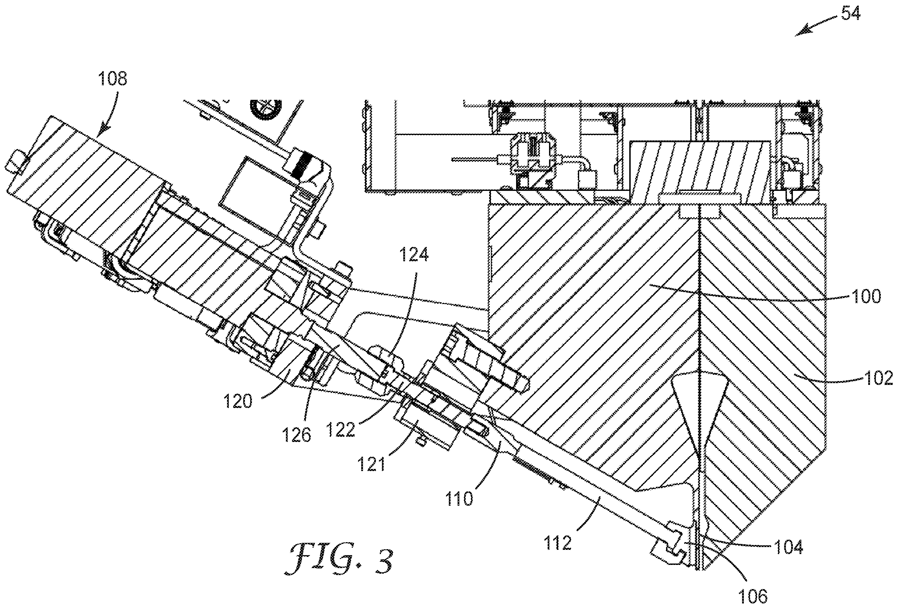

FIGS. 2 and 3 show the slot die 54 from perspective and cross-sectional views, respectively. As shown in FIG. 3, the slot die 54 includes a pair of opposing die blocks 100, 102 that together define a path of fluid flow from the extruder to the applicator slot 104. A distal end of the die block 100 is provided with a slot adjustment mechanism, here a die lip 106 that defines a surface of the applicator slot 104. While not depicted in the figures, the slot adjustment mechanism could alternatively be provided by a choker bar located upstream from the die lip.

As shown in FIG. 2, the slot die 54 includes six primary actuators 108. In some embodiments, the primary actuators 108 represent an assembly of components, including a motor that drives a linear actuator. It can be advantageous for each assembly to include a precision sensor, such as a linear variable differential transformer (LVDT) or a linear encoder, that detects position movements of the output shaft of the linear actuator. Further details relating to useful actuator assemblies are described, for example, in co-pending PCT Patent Application Nos. PCT/IB2020/061685 (Yapel, et al.), PCT/IB2020/061687 (Yapel, et al.), and PCT/IB2020/061688 (Secor, et al.), and U.S. Provisional Patent Application No. 63/122,996 (Secor, et al.), all of which were filed on December 9, 2020.

Referring again to FIG. 2, each of the six primary actuators 108 is mechanically coupled at its distal end to multiple secondary actuators 112. In this embodiment, each secondary actuator 112 is represented by one of a plurality of tines in a fork 110, in which each tine is individually controllable. Alternatively, it is possible to use a secondary actuator that has only a single tine, which may be adequate for applications where the spacing between primary actuators 108 provides a sufficient resolution in controlling the die lip 106. In preferred embodiments, each fork can include at least 2, 3, 4, 5, 6, 7, or 8 or more tines.

The distal end of the secondary actuators 112 engages a surface of the die lip 106, allowing for local adjustment in the position of the die lip 106. The engagement can be, in some cases, a mechanical coupling that allows the secondary actuators 112 to apply both pushing and pulling forces to the die lip 106. Alternatively, the engagement between the secondary actuators 112 and surface of the die lip 106 can be a mere contact that only allows pushing forces to be applied. In other embodiments, the secondary actuators 112 could engage other surfaces of the slot die 54, such as a choker bar surface.

FIG. 3 illustrates interior features of the slot die 54 in greater detail. As shown, the die blocks 100, 102 of the slot die 54 combine to form a fluid flow path through the slot die 54 that is in fluid communication with the applicator slot 104.

The primary actuators 108 are fastened to mounting brackets 120, 121 along the width of slot die 54, where the mounting brackets 120, 121 are fixed relative to the die block 100 and support the primary actuator 108 and the forks 110, respectively. Each primary actuator 108 is operable to adjust a height of the fluid flow path at its respective location along the width of slot die 54 to provide a local adjustment of fluid flow through applicator slot 104 by changing the position of the die lip 106. A body 111 of each fork 110 extends through the mounting bracket 121, optionally assisted with a linear bushing, to help reduce buckling or deflection of the fork 110 when applying forces to die lip 106. In some embodiments, the body 111 of the fork 110 can be coupled to a spindle 122 that attaches to the top of the fork 110 via a shoulder bolt attachment that provides minimal backlash.

During operation of slot die 54, an extrudate enters slot die 54 continues through the fluid flow path of slot die 54 until the extrudate exits through applicator slot 104 and is applied to chilled roller to solidify the melt. While not germane to this disclosure, such processes include, but are not limited to, stretching, coating, texturing, printing, cutting, rolling, and laminating. In some processes, production release liners can be removed and release liners added, or one or more additional layers (such as a laminated transfer tape) can be added. Where the extrudate is a curable composition, curing steps could also occur, such as through exposure to e-beam, an oven, or an ultraviolet (UV) chamber.

In a preferred embodiment, the primary actuator 108 is operated with the assistance of a controller. The controller can receive position inputs from both a motor and a sensor. For example, the motor may be a stepper motor that provides an indication of the number of "steps" the stepper motor has taken from a known reference position of the stepper motor. The sensor can provide more precise position information to the controller than that provided by the motor. The controller can further provide instructions to the motor to drive spindle 122 of the primary actuator 108 to a preselected position. For example, the controller can monitor the position spindle 122 of primary actuator 108 with sensor 230 while operating motor 210 in order to position spindle 122 of primary actuator 108 according to a preselected position. In some examples, the controller may control a set of primary actuators 108, either simultaneously or sequentially. For example, the controller might concurrently control each of the primary actuators 108 in slot die 54, as shown in FIG. 2.

In contrast to slot-die designs that utilize differential bolts as actuation mechanisms, a zero-backlash coupler 124 can be used, as shown here, to connect an output shaft 126 to the spindle 122 of the primary actuator 108 with limited or no backlash. To achieve this, the primary actuator 108 can use a positional sensor incorporating a linear voltage displacement transducer, digital scale, capacitance gauge, optical displacement gauge, laser displacement gauge, or combination thereof to adjust a body 111 of a fork 110 to a precise position. Whereas as a differential bolt mechanism may have a backlash of more than one-hundred micrometers, the zero-backlash coupler 124 may provide almost no backlash, such as less than ten micrometers, or even less than five micrometers, such as about three micrometers.

In a slot die utilizing a set of differential bolts to control applicator slot width or choker bar position, the relatively large backlash of each differential bolt means that adjusting the position of one differential bolt may change the height of the fluid flow path at other bolts. For this reason, the absolute position of the die lip 106 may never be known while operating the extrusion die. In contrast, in slot die 54 the position of spindle 122 of primary actuator 108 directly corresponds to the local position of die lip 106. Particulars of this actuator assembly are described in greater detail in, for example, co-pending International Patent Application No. PCT/IB2020/061685 (Yapel, et al.). A primary advantage includes repeatable and precise positioning not available in slot dies utilizing conventional differential bolts.

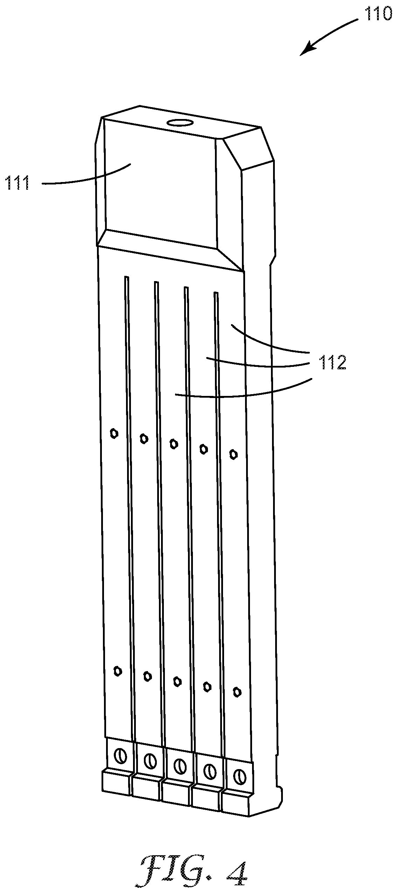

FIG. 4 shows an enlarged view of a fork 110 disassembled from the rest of the slot die 54. As depicted, the fork 110 is comprised of a series of six tines that function as independently adjustable secondary actuators 112 extending outwardly from a body 111 towards the die lip 106. Advantageously, each secondary actuator 112 provides its own control zone, allowing for a six-fold increase in precision when controlling the shape of the die lip 106.

Optionally and as shown, the body 111 and tines are part of a unitary construction. In this example, each tine has a length that is controlled by thermal expansion and contraction. To provide control, each of the tines contains a resistive heating element and has a connection to a source of electrical power along with a thermal sensing device, enabling a control loop to heat a tine to a pre-determined temperature. These components are partially embedded in the tines to protect them from damage during operation of the slot die 54. The thermal sensing device could be incorporated in a cartridge heater in the tine or attached to the tine. Other ways to heat the tine, such as infrared heating, are also possible. As a further option, it is also possible to provide an ability to cool each tine to obtain even better control over tine temperature and enable a faster response time. Such cooling could be accomplished by forced air convection, for example.

A suitable controller can be used to control the length of each secondary actuator 112, thereby defining the position where mechanical engagement occurs between the secondary actuator 112 and die lip 106. This controller can be separate from, or integral with, the controller used for the primary actuator 108. Useful controllers include proportional-integral-derivative (PID) controllers that apply a control loop mechanism. The length of the secondary actuator 112 is most directly correlated to the temperature of the secondary actuator 112 but this length can also be controlled based on a pre-determined correlation with the power input (i.e., %Power) to each secondary actuator 112. The latter method can be simpler but tends to be more prone to thermal disturbances, which can affect the secondary actuators 112 unevenly.

The primary and secondary actuators 108, 112 collectively control the position of the die lip 106 based on the mechanical coupling between the distal end of the secondary actuators 112 and the die lip 106. It is noted that the primary and secondary actuators 108, 112 operate in series, and as such, various combinations of actuator settings can provide the same terminal position of the die lip 106 for a given control zone. As will be shown, however, it can be advantageous for the primary and secondary actuators 108, 112 to be adjusted in a coordinated fashion when making slot height adjustments to the applicator slot 104.

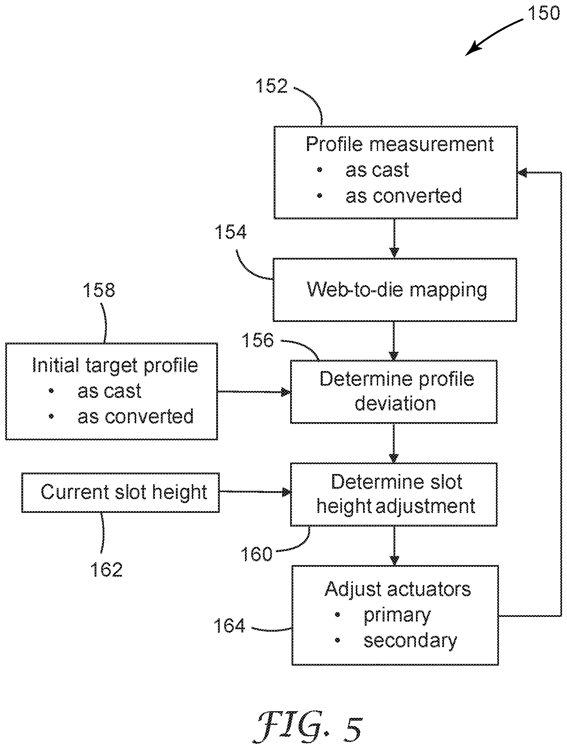

FIG. 5 shows an exemplary workflow 150 using a single control loop to achieve a slot height adjustment in a provided slot die, such as the slot die 54 operating in the environment of the manufacturing process line 50 in FIG. 1.

At the beginning, the manufacturing process line 50 operates to form the extruded web 68 using initial primary and secondary actuator setting profiles that are pre-determined. These initial profiles can be saved based on historic data based on similar process conditions, or lacking such data, these profiles could be set to default values based on user input. Both the primary and secondary actuators therefore assume initial positions according to these pre-determined settings at the outset of a control loop. As a starting point, it can be convenient for the pre-determined settings for the primary and/or secondary actuators to be constant, or flat, across most or all of the width of the slot die.

Block 152 shows a first step of providing a profile measurement for the web extruded from the applicator slot of the slot die. As described previously, any known measurement technique can be used. The profile measurement can be taken as cast or after some the extrudate has been oriented or otherwise altered. In the former case, measurement of web thickness profile occurs close to where the extruded web exits the applicator slot ("as cast"). In FIG. 1, for example, this thickness measurement could be carried out at location 64, shortly after the molten web is solidified on the chill roll of the casting roll assembly 56. In the latter case, the profile measurement occurs after the web undergoes some processing ("as converted"). In FIG. 1, the measurement could take place at location 66, after the cast web has been stretched along both cross-web and down-web directions.

It is noted that many gauging devices scan back and forth across the width of the moving web to collect thickness data. In many instances, these measurements can involve a very large number of discrete measurements, which are not only scattered across the entire width of the web but may be taken at different points in time. To manage this, a controller can process the raw discrete measurements into a smaller number of data values, that uses a form of cross-web and down-web averaging to capture a virtual snapshot of cross-web thickness profile at a particular location along the continuous web.

The provided methods can be used for both continuous full-web coated extrudates and stripe coated extrudates. In a full-web coating, the multitude of measured values represent the entire coated width. In the case of stripe coating, measured thickness values corresponding to a plurality of coated regions spaced apart each other along a cross-web direction, such that the measured values only cover the coated stripes and not the uncoated lanes in-between.

Block 154 represents the next step of performing a web-to-die mapping of these profile measurements. Certain simplifying assumptions can be made when mapping the gauge measurement to the die. First, it can be assumed that the data received from the profile measurements are taken from edge-to-edge, given that modern gauging systems have edge detection. Second, it is assumed that gauge data directly corresponds to actual extrudate weights/thicknesses. If the web is disposed on a release liner, it can be further assumed that the basis weight of the release liner is subtracted, and the data represents the coating weight only. Finally, it can be assumed that any neck-in from both edges of the extruded web occurs symmetrically.

The number and locations of the coarse-grained measurements is often different from that of the die lip actuators, and so, a generalized method of mapping the measurement values to actuator locations is desired. Film neck-in calculations can consider the effects of different flow rates, draw distances, and web speeds. In one embodiment, coated web coordinates in physical units (inches or mm) are mapped to the coordinates in actuator units, (i.e., a die coordinate system based on sequential actuator number). This process enables mapping from a coating measurement array value to a physical coated web position, and then through the web-to-die mapping function to a physical die position. Here, the coating measurement array can represent, for example, the most recent array of thickness measurements generated each time a scanner traverses the moving web.

With a suitable die-to-web or web-to-die mapping function, it may be advantageous to utilize the function elsewhere in the profile control scheme. For example, the mapping could incorporate cross-web variation in the control parameters, such as controller gain or actuator interaction through the coating flow field. This could be done in an *ad hoc* fashion based on production experience or in a more scientifically-based manner using fluid mechanical models of the coating flow field.

Modeling the flow may use of any appropriate models characterizing fluid rheology. For example, modeling the flow may include finite element analysis or may more directly rely on one or more equations. Exemplary mathematical models are described elsewhere in co-pending PCT Application No. PCT/IB2020/061688 (Secor et al.), filed on December 9, 2020.

Computational prediction of a slot die adjustment is possible because the position of the actuator, and by inference the slot height, is known in combination with the desired extrudate target thickness, the current measured extrudate thickness. Previously, knowing the absolute position of the slot height during an extrusion process has not been possible, e.g., due to the backlash in differential bolts. Using the known target thickness and the measured extrudate thickness profile, these computations can predict an appropriate slot die change. Based on this knowledge, the relationship between slot height profile and extrudate thickness profile can be known, and it thus possible to predict a slot height profile to obtain the target thickness profile.

In some embodiments, this mapping incorporates any scan-location-to-die-bolt-location mapping already built into the measurement system. Various commercial systems are capable of performing web-to-die mapping, such as profile control solutions from NDC Infrared Engineering Inc., Irwindale, CA.

Proceeding then to block 156, a profile deviation for the web thickness is then determined. This can be provided by a residual array of values (i.e., vector) representing the degree to which the current web thickness profile deviates from a target web thickness profile (block 158) at each control zone. The control zone, as referred to herein, can correspond to the segment of the slot die corresponding to each primary actuator, or alternatively, each secondary actuator.

The initial target profile in block 158 can be defined at a location near to the extrudate exiting the slot die (e.g., at location 64 in FIG. 1) or, alternatively, a location downstream from where the web has been partially or fully converted (e.g., at location 66 in FIG. 1). It can be of significant technical benefit to incorporate both types of measurements to fully understand, and correct for, deviations between desired and actual web thickness profiles that may be attributable to different sources in the process line 50.

In subsequent iterations of workflow 150, the profile deviation determined in block 156 can be based on either the initial target web thickness profile set in block 158, or if desired, a revised target web thickness profile. Revisions to the target web thickness profile are not particularly restricted and can be made in a pre-determined manner according to a computer algorithm or manually by input from an operator.

When the workflow 150 is initially executed, the target web thickness profile can be based on a saved web thickness profile, such as an array of web thicknesses used in a previous iteration of the workflow 150 or other workflow conducted under similar conditions. For example, a previously used target web thickness profile can be useful when the same or a similar die slot configuration and similar flow conditions through the slot die are being used. In many applications, a flat extrudate profile is desired, but there are situations where other profiles are preferred. For example, a "dogbone" shaped target profile might be desired to control edge instabilities in the extrusion process, such as those relating to draw resonance or edge scalloping.

In block 156, a profile deviation is then determined based on the difference between the initial target web thickness profile from block 158 and a measured web thickness profile, if available. Initial iterations of the control loop in workflow 150 can be carried out before a complete set of web thickness measurements is obtained. If a measured web thickness profile is not yet available, adjustments in the slot die may be delayed until such time there is a sufficient number of web thickness measurements. To the extent that a partial profile measurement (block 152) might be obtained, the workflow 150 could be used to adjust the slot die along one portion of the applicator slot but not another.

With a profile deviation thus determined, an appropriate slot height adjustment can then be calculated (block 160). When predicting the adjustment to the primary or secondary actuators engaged to the flexible die lip or choker bar suitable to achieve the initial target profile from block 158, it can be advantageous to apply a pressure die deflection model that enables the effects of fluid flow through the die to be decoupled from mechanical effects relating to the slot die in absence of fluid flow. A suitable model can predict the pressure profile across the applicator slot and corresponding amount of pressure deflection in the flexible die lip or choker bar. In some cases, it can be possible to empirically measure this pressure-based deflection.

The pressure deflection can be accounted for by adding it to a calculated slot height to obtain a target slot height profile. This target slot height profile can then be compared with a current slot height profile (block 162) to determine an appropriate adjustment. Notably, the current slot height includes some degree of pressure deflection (D) that is due to extrudate composition flowing through the applicator slot. So, assuming that any change in the amount of deflection D is small, the deflection D solely attributable to the fluid can be subtracted from the pressure-compensated slot height profile, H+D, to obtain the zero-pressure slot height profile (H), which can then be used to calculate the target actuator positions.

Mathematical models describing fluid dynamics and pressure effects in the slot die are described in detail elsewhere, for example in co-pending International Patent Application No. PCT/IB2020/061688 (Secor, et al.), and U.S. Provisional Patent Application No. 63/122,996 (Secor, et al.), both filed on December 9, 2020.

With the zero-pressure slot height profile obtained above, a controller can then predict a set of discrete actuator settings suitable to achieve the desired slot height profile. In a preferred embodiment, this set of discrete actuator settings is based on a plurality of actuator settings corresponding to a pre-selected cross-web profile. As will be described below, the plurality of discrete actuator settings can be determined for a series of pre-selected cross-web profiles, thereby providing a predictive model to determine an appropriate actuator adjustment (block 164).

In a preferred embodiment, the prediction of the discrete settings from the plurality of discrete settings and/or the zero-pressure current slot height, as derived from the current slot height (block 162), can be obtained through a mathematical construct called a stiffness matrix. The stiffness matrix transforms actuator settings to corresponding slot height profiles in absence of flow field physics effects. While not examined in detail here, International Patent Publication No. WO 2012/170713 (Secor, et al.) describes in greater detail an example of how empirical test data can be used to populate the stiffness matrix for a given slot die.

At a high level, the stiffness matrix and inverse stiffness matrix are used to convert actuator position changes to slot height changes, and vice versa. The stiffness matrix can be represented by Equations 1 and 2 below.

$$(h - h_0) = \frac{\partial h}{\partial A} \bullet (A - A_0) \qquad \text{(Equation 1)}$$

$$K \equiv \frac{\partial h}{\partial A} = kI \qquad \text{(Equation 2)}$$

In Equations 1 and 2, $h_0$ and $h$ are vectors representing current and new slot heights, respectively, $A$ and $A_0$ are vectors representing of current and new actuator positions (in actuator units), respectively, $K$ is a stiffness matrix, $I$ is the identity matrix, and $k$ is a proportionality constant that converts actuator position changes to slot height changes and is the same for each actuator.

The stiffness matrix $K$ generally has $N \times N$ components ($N$ being the total number of active actuators) and physically represents the change in the slot height at a measurement point due to a change in the $j^{th}$ actuator setting, $A_j$. The stiffness matrix can reflect significant mechanical interactions between actuators. Commonly, an actuator position change can produce a slot height change at a position several actuators away. In some embodiments, this is represented by a banded stiffness matrix. In many cases, the banded stiffness matrix can be assumed to be symmetric. For example, the matrix could have significant nonzero components only along 5 diagonals of the matrix - the main diagonal plus 2 diagonals on either side.

Once the stiffness matrix is determined, slot height measurements can be used in two ways. First, for any set of actuator settings, the resulting slot height profile can be computed by multiplying the stiffness matrix with the actuator displacements according to Equations 1 and 2 above. Secondly, the actuator settings that will result in a specified slot height profile are calculated by multiplying the inverse of the stiffness matrix with the desired change in slot height. For determining the appropriate set of actuator adjustments, Equation 3 is used:

$$(A - A_0) = K^{-1} \bullet (h - h_0) \qquad \text{(Equation 3)}$$

In block 164, the active actuators can then be adjusted to appropriate positions according to the calculated actuator adjustments above to achieve the desired slot height profile. In a preferred method to solve this linear algebra problem, a Gaussian Elimination is performed to obtain a matrix-based solution of stiffness matrix transformations.

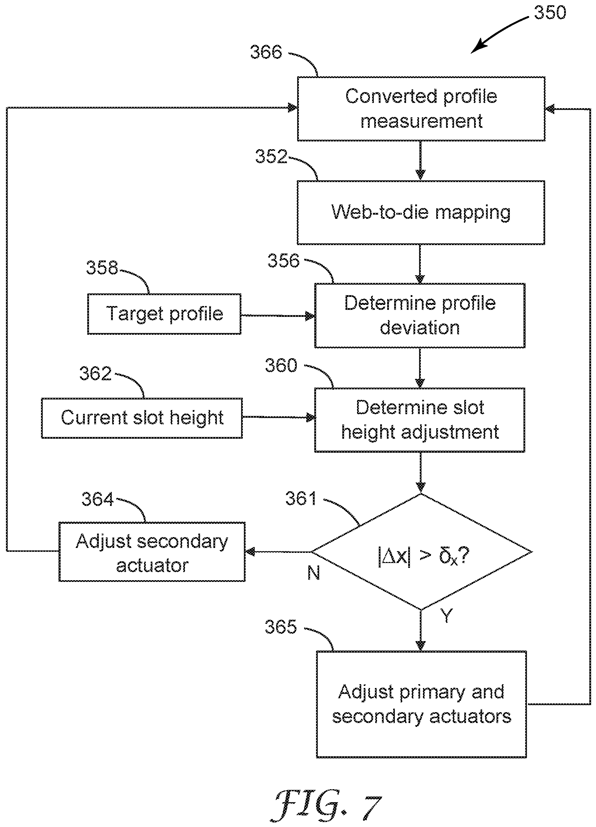

As noted in FIG. 5, the actuator adjustments in block 164 can apply to either the primary actuators, secondary actuators, or both. Where the primary actuators are being adjusted, the secondary actuators can be kept passive, such that the tines of each fork move collectively rather than individually. Where the secondary actuators are being adjusted, the primary actuators may be fixed (or passive) while the secondary actuators are adjusted. As a third possibility, and as will be described later in FIG. 7, it is possible and indeed can be advantageous for both the primary and secondary actuators to be adjusted simultaneously.

With the actuator adjustments completed, the workflow 150 returns to block 152 where a new profile measurement is taken and the process described above starts anew. The steps in workflow 150 can progressively improve the primary/secondary actuator settings/positions based on real time web thickness measurements. Over time, through these stepwise adjustments, the extrudate web thickness can converge to the desired target web thickness profile.

The above workflow 150 can be implemented using the slot die 54 in FIGS. 2 and 3 as a polymer melt is conveyed along the fluid flow path and expelled from the applicator slot 104. Here, the controller predicts settings for one or both sets of primary actuators 108 and secondary actuators 112 to incrementally push or pull the die lip 106 at each of many control zones along the applicator slot 104 according to the actuator adjustments determined in block 164. Since each primary actuator 108 corresponds to six secondary actuators 112, it can be efficient for a controller to predict primary actuator settings to obtain a target slot height profile at a coarse scale, and then predict secondary actuator settings to obtain the target slot height profile at a finer scale.

In some embodiments, position of a primary actuator is determined based on a respective target primary actuator position, and then determining a position of each secondary actuator corresponding to the primary actuator based at least in part on the target primary actuator position. Advantageously, the target primary actuator position can be determined, or adjusted, to reduce variation of a length control signal amongst the secondary actuators. While the length control signal used here for the secondary actuators is temperature, other length control signals are also possible, including power, piezoelectric voltage, or hydraulic pressure.

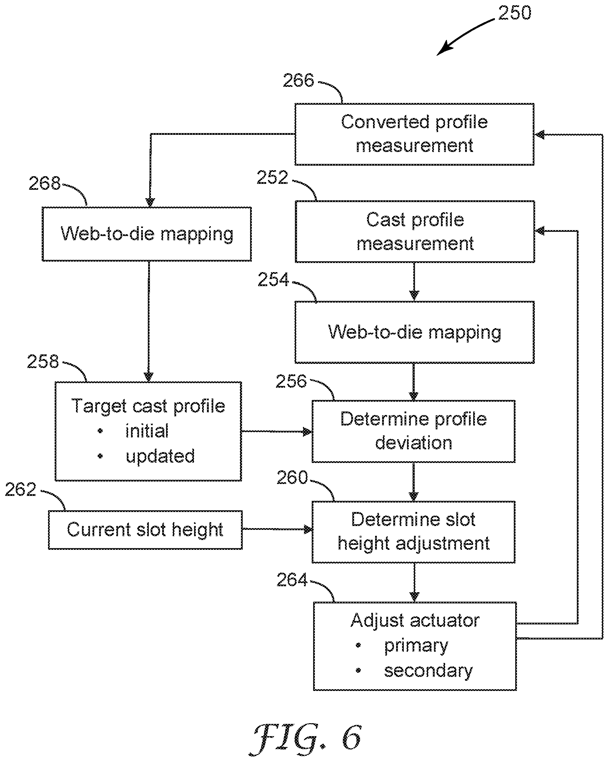

FIG. 6 shows an alternative workflow 250 using nested control loops. The workflow 250 incorporates some of the elements already described in workflow 150, including a cast profile measurement (block 252), web-to-die mapping (block 254), determination of a profile deviation (block 256) based on an initial target cast profile (block 258), determination of a slot height adjustment (block 260) based on a current slot height (block 262), and actuator adjustment (block 264). These steps, constituting the inner control loop, are analogous to those examined above in workflow 150 and shall not be revisited.

Workflow 250 also includes an outer control loop. This loop begins with block 266, where a converted profile measurement is provided. This converted profile measurement, taken downstream from the cast profile measurement (block 252), can occur at any time during the execution of the inner control loop. Thus, the steps in the inner and outer loops need not coincide with each other.

Block 268 denotes a web-to-die mapping step conducted for the converted profile measurement in block 266. The web-to-die mapping for a converted web thickness profile can be more complex than the web-to-die mapping conducted in block 254. In the process line 50, for example, actions of the machine direction stretcher 58 and transverse-direction stretcher 60 substantially elongate the extruded film. Assuming these processes provide predictable and reproducible results, mathematical models can be used to map the cross-web coordinate system after conversion to the cross-web coordinate system of the extruded web prior to its conversion.

Where there are multiple conversion processes, a series of mapping calculations is generally used to map the converted web thickness profile back to the slot die in stepwise manner. In a preferred embodiment, the converted profile is mapped back to a cast profile and then the cast profile is mapped back to the die, this latter step following the same process as described above for the web-to-die mapping step of block 254. As an example, a measured profile at location 66 of FIG. 1 can be mapped to a profile at location 64, and then mapped back to a profile at die 54. Conveniently, this allows the computational algorithm from block 254 to be reused.

Proceeding next to block 258, the target cast profile for web thickness can then updated accordingly based on instructions from the controller. This cast profile replaces the previously used target cast profile. Like those referenced earlier, useful controllers can include PID controllers that apply iterative, incremental changes to progressively improve the target cast profile represented by block 256 until the desired converted profile is reached. While the inner and outer loops operate concurrently, the outer loop provides feedback on a far longer cycle time, since the impact made by a change in actuator settings cannot be known until the extruded web has travelled through the entire conversion process.

The outer loop and inner loop preferably complement each other in a coherent optimization scheme. The inner loop based on a first web thickness profile measured at a first location of an extruded web, with the target slot height profile is held constant for at least some iterations of the inner loop. The outer loop is based on a second web thickness profile measured at a second location of the extruded web downstream from the first location, and the target slot height profile is updated at each iteration of the outer loop. Accordingly, the inner loop operates on a short time frame and continuously adjusts primary/secondary actuator settings seeking convergence to a target profile, while the outer loop operates on a longer time frame in periodically adjusting the target profile "chased" by the inner loop.

FIG. 7 shows yet another exemplary workflow 350 that shows the interplay between actuators, such as the primary and secondary actuators 108, 112 shown in FIGS. 2-4. At the outset, it is noted that by virtue of having two actuators coupled to each other end-to-end introduces a number of interesting complications. First, a single target web thickness profile can correspond to an indefinite number of solutions, since a lengthening of one actuator can be accompanying a shortening of the other. Second, in instances where a primary actuator is coupled to multiple secondary actuators, the ranges of possible positions for the secondary actuators are commonly constrained by the position of the primary actuator. Third, in many situations, the primary and secondary actuators can have very different response times. Finally, in certain situations, neighboring actuators can be subject to interference, such as that caused by heat transfer, based on their proximity to each other.

Some of these considerations are taken into account in the workflow 350, which like prior workflows, includes a web thickness profile measurement of the converted web (block 366), followed by a web-to-die mapping of this profile (block 352), determination of a profile deviation (block 356) relative to a target profile (block 358), and determination of a slot height adjustment (block 360) relative to a current slot height (block 362). At block 361, an analysis is conducted by the controller based on whether the following condition is satisfied:

$$|\mathbf{D}x| > \mathrm{d}_x$$

, where $x$ is a length control signal of a primary actuator, Dx is a proposed actuator adjustment, and $d_x$ is a pre-determined threshold value for a change in $x$ correlated with the resolution of the primary actuator.

The proposed actuator adjustment Dx in the exemplary configuration of FIGS. 2-4 can be determined by calculating the difference between the average tine temperature for a given fork 110 and the average target tine temperature for that same fork 110. Since the fractional thermal expansion or contraction of the tines (secondary actuators 112) is linearly related to the change in temperature, this measure is directly correlated to a change in actuator length.

The desired length control signal $x$ can be calculated from any of the methods previously described, such as through an inverse stiffness matrix determined using bump test data, and optionally accounting for pressure effects induced by fluid flow in the slot die. In some embodiments, $d_x$ reflects a primary actuator deadband, or a range of length control signal too small to be resolved by the primary actuator, yet capable of being resolved by the secondary actuators to which it is coupled.

If the magnitude of the proposed actuator adjustment Dx is equal to or smaller than the threshold $d_x$, then the secondary actuators 112 are adjusted (block 364) accordingly and the process begins again with a converted profile measurement (block 366). Here, the adjustment is made exclusively by the secondary actuators 112, with the primary actuator 108 positions remaining static. By contrast, if the proposed actuator adjustment Dx is larger than the threshold $d_x$, then both the primary and secondary actuators are adjusted (block 365) as shall be described in more detail below.

An illustrative example is represented by the primary and secondary actuators 108, 112 in FIG. 3, where the primary actuator is moved using a screw differential coupling while the secondary actuator is moved by thermal expansion and contraction. More broadly, the primary actuators could be driven by a mechanical, thermally-adjustable bolts, piezoelectric, hydraulic, or pneumatic device. It is preferable if the primary and secondary actuators are adjusted in coordinated fashion. Optionally, both the primary and secondary actuators are adjusted simultaneously to provide for a smoother adjustment in overall actuator position.

In one exemplary primary actuation mechanism, the applicator slot can be adjusted by applying a pressing load or tensile load to a flexible die lip using a lever supported by a rotating shaft as a fulcrum, along with an operating rod displaced in an axial direction by the body of the slot die. Rotational force of the lever is converted into a force in the axial direction of the operating rod, and the force in the axial direction becomes a pressing load or a tensile load exerted on the flexible die lip. The lever directly can apply a force to the operating rod at the point of action of the lever.

In another example primary actuation mechanism, thermally adjustable bolts automatically regulate the applicator slot using a plurality of adjusting pins, coupled to respective thermoelements disposed on a flexible die lip. The thermoelements can be controllable by the controller to adjust the applicator slot through the action of mechanical force applied to the flexible die lip by the corresponding adjusting pin through expansion or contraction of the thermoelements. As a further option, the actuation mechanism can include providing at least two adjusting pins and/or thermoelements that are simultaneously adjusted.

Further aspects of the foregoing, along with other variants, are described in U.S. Patent No. 9,700,911 (Nakano) and International Patent Publication No. WO 2019/219724 (Colell et al.).

A preferred embodiment of the coordinate adjustments above includes using the primary actuators, which have a longer stroke of actuation, to provide the bulk of the overall movement. This overall movement is based on the distal end of the secondary actuator for each control zone. If multiple secondary actuators are coupled to each primary actuator, then primary actuator adjustments can be calculated based on adjusting each primary actuator to a target position calculated based on an average target position for its corresponding secondary actuators. The averaging can help avoid expanding or contracting the secondary actuators more than necessary. Making large adjustments using certain secondary actuators, such a thermal bolts, is not only technically challenging but can also take a long time to achieve and stabilize. This in turn can adversely impact the overall responsiveness of the control loop in workflow 350.

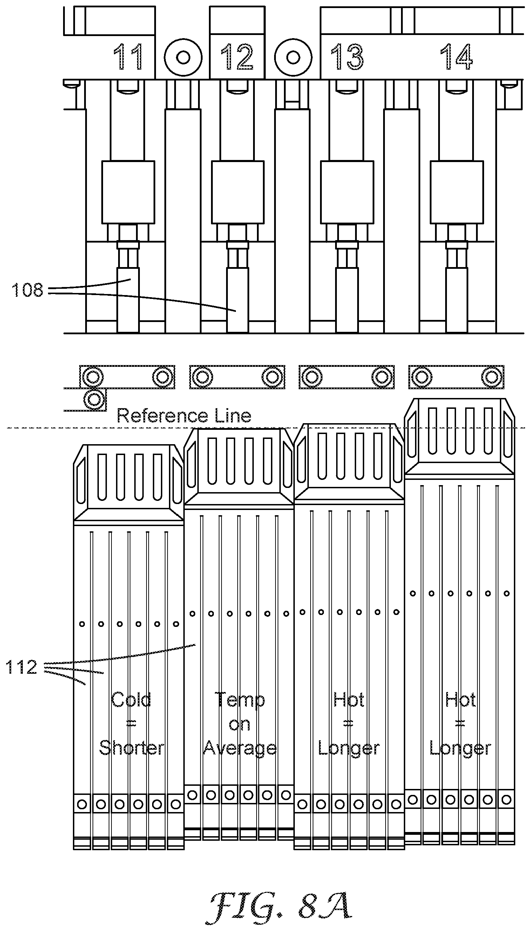

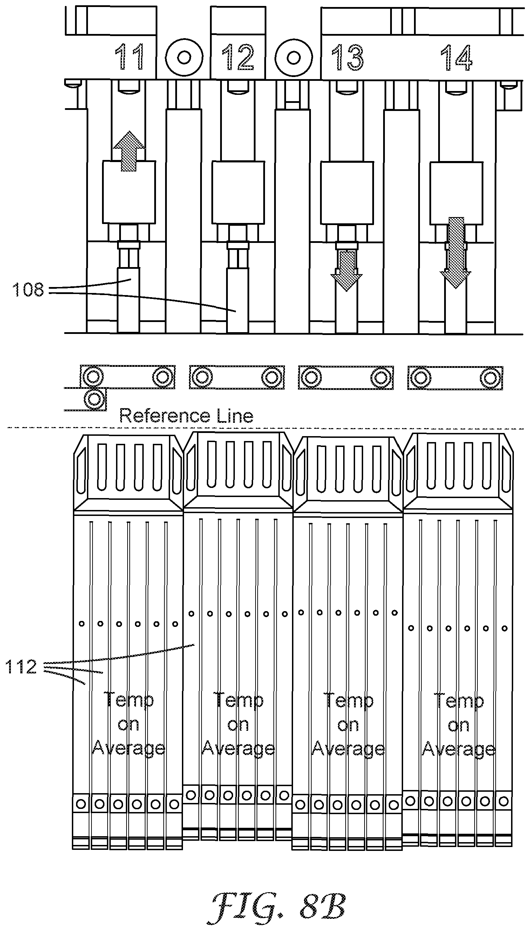

The benefit of the aforementioned method is illustrated in FIGS. 8A and 8B, which show primary and secondary actuators 108, 112 in two different configurations. The depicted configurations show the same ultimate position, but with very different relative contributions from the primary and secondary actuators 108, 112. In FIG. 8A, the secondary actuators 112 (shaded in grey) show significant variations in length, the result of heating the secondary actuators 112 to very different temperatures. In FIG. 8B, by contrast, the same secondary actuators 112 have a nearly uniform temperature profile and length. In the latter case, the primary actuators 108 precisely compensate for the differences in length of the secondary actuators 112 by translating toward or away from the die lip as shown by the block arrows.

Redistribution of length between the secondary actuators (i.e., tines) and primary actuators (i.e., forks), while preserving die lip position, can be achieved by applying Equations 4 and 5 to adjust these actuators:

$$T_{new} = T_{old} - (\overline{T}_{measured} - \overline{T}_{target}) \qquad \text{(Equation 4)}$$

, where $T_{new}$ is a new tine temperature, $T_{old}$ is an old tine temperature, $\overline{T}_{measured}$ is an average measured tine temperature within a fork, and $\overline{T}_{target}$ is an average target tine temperature within a fork.

$$A_{new} = A_{old} - Y \times (\overline{T}_{measured} - \overline{T}_{target}) \qquad \text{(Equation 5)}$$

, where $A_{new}$ is a new primary actuator position (in actuator settings), $A_{old}$ is an old primary actuator position, and $Y$ is a fixed conversion factor between temperature and actuator setting.

A uniform distribution of temperatures can help minimize thermal disturbance caused by heat transfer between the secondary actuators 112 and to the flexible die lip of the slot die. Thermal disturbances can reduce predictability in the extrusion process and is generally considered to be undesirable. In a preferred embodiment, the average of the target tine temperatures for all of the secondary actuators 112 correspond to the operating temperature of the slot die to further mitigate the extent of undesirable heat transfer between the tines and the flexible die lip.

With the primary actuator settings re-calibrated as above, the net result is reduced temperature variation in the secondary actuators 112 while providing an identical profile of actuator positions as evidenced by comparing FIG. 8A to FIG. 8B. Since the primary actuators 108 are capable of responding far more quickly than the thermally-controlled secondary actuators 112, it can be beneficial for the primary actuators 108 to be adjusted gradually to allow time to position the secondary actuators 112 and avoid sudden actuator length changes while manufacturing product.

Referring now back to FIG. 7, the adjustment of the primary and secondary actuators in block 365 can then be completed. Following this, a new converted profile measurement (block 366) can then be obtained and the process begins again.

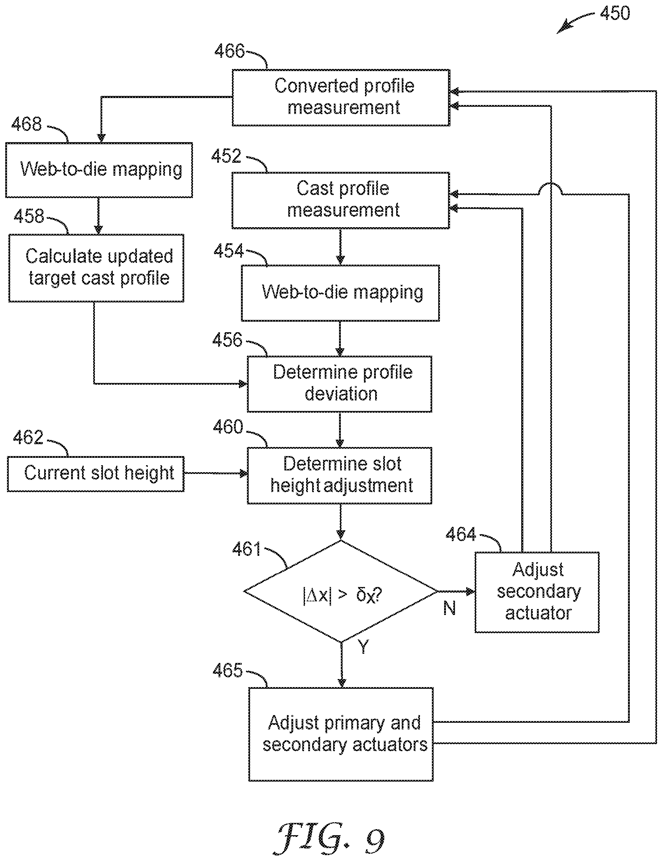

FIG. 9 shows yet another workflow 450 that combines elements of prior workflows 150, 250, 350. As described previously, the process includes a cast profile measurement (block 452), web-to-die mapping (block 454), determination of a profile deviation (block 454), and determination of a suitable slot height adjustment (block 460) with knowledge of the current slot height (block 462). Then, as articulated in prior workflow 350, the test of block 461 is applied to determine whether or not a certain threshold for primary actuator adjustment is satisfied. Depending on whether this test condition is met, the workflow 450 either proceeds to adjust the secondary actuator exclusively (block 464) or adjust the primary and secondary actuators together (block 465).

The added refinement in workflow 450 is the combination of an inner and outer control loop. So, while the controller makes actuator adjustments based on cast profile measurements (block 452), there are also actuator adjustments made based on converted profile measurements (block 466), requiring a web-to-die mapping (block 468) and calculation of an update target cast profile (block 458). There steps are analogous to those described in workflow 250 in FIG. 6. Unlike workflow 350, workflow 450 includes adjustments based on cast profile measurements which have a far shorter response time. Combining both inner and outer control loops can provide for faster convergence on a solution and a significantly more responsive and efficient slot die adjustment process overall.

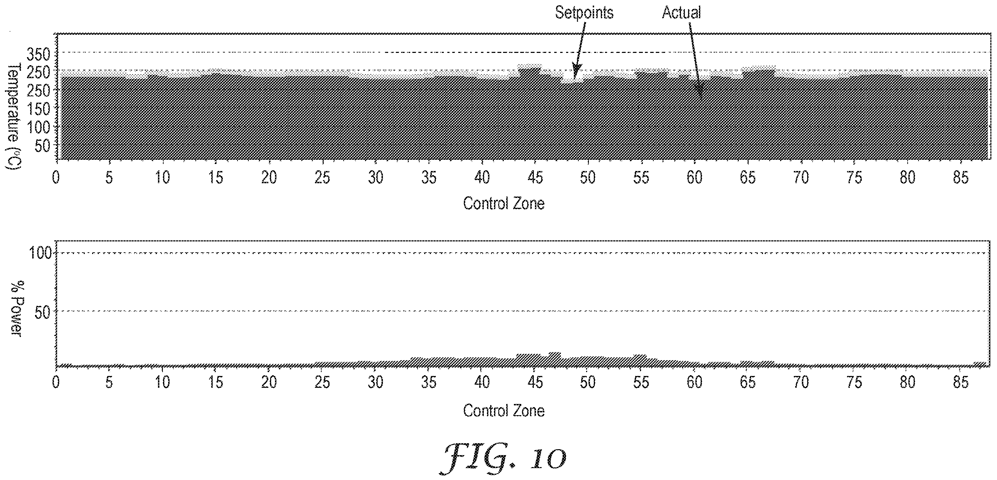

FIG. 10 provides an actual example of a dashboard of a hybrid actuator control system showing a temperature profile across 88 actuator control zones, which are represented along the horizontal axis. In the example shown, the setpoint for die temperature is 240°C. The upper chart in FIG. 10 shows the tine temperatures for each control zone. The lower chart shows the %Power being directed to each tine, which shows the non-uniformity in the distribution of power going to the different control zones, especially when comparing the center actuators to those closer to the edges of the applicator slot. Non-uniformity can be attributable to differences in air flow in the tine cooling plenum; in this case, the figure reveals a higher rate of cooling near the center of the die slot compared to the ends. These data further demonstrate that the hybrid actuator control scheme is capable of holding average temperature of the tines close to the target average temperature, fork by fork.

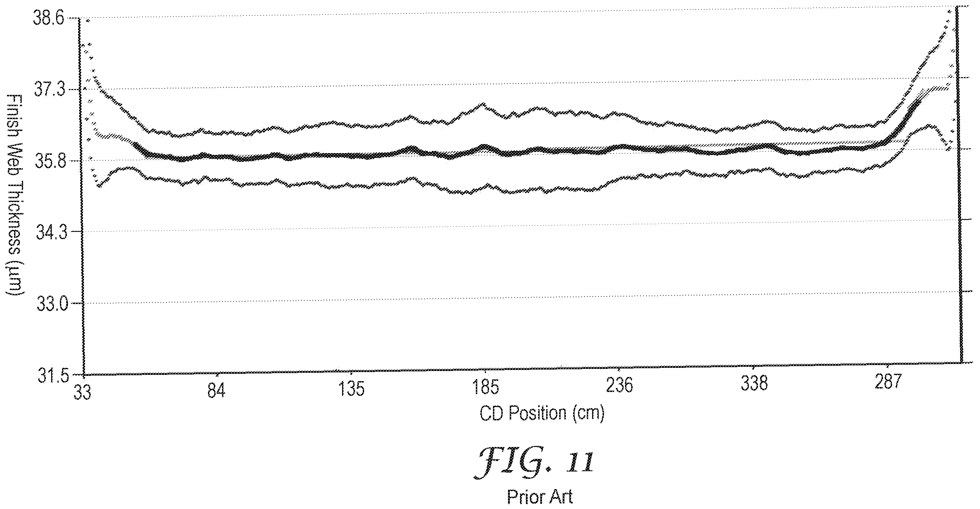

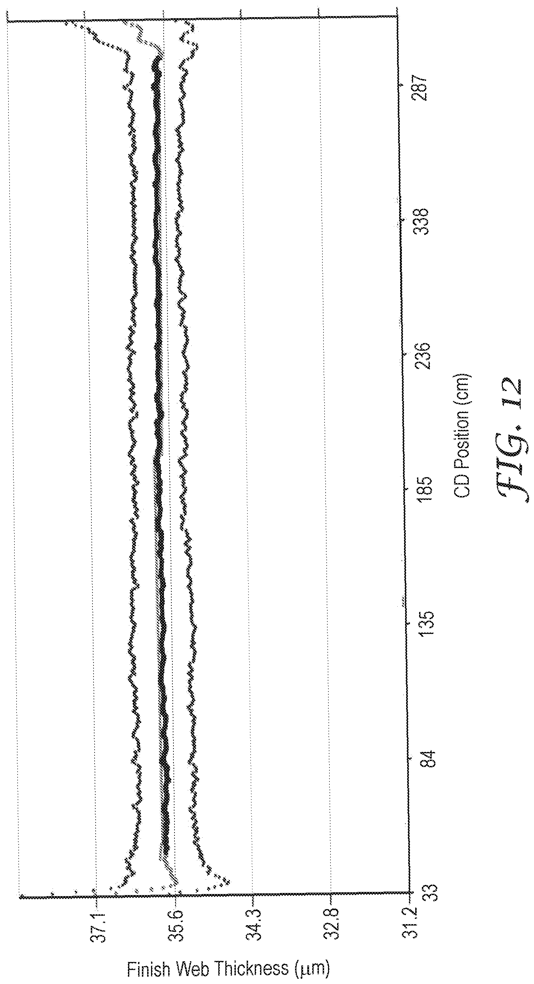

FIGS. 11 and 12 show the significant technical benefits provided by the hybrid actuator control scheme. The FIG. 11 (prior art) plot shows extruded web thickness profile over 144 control zones (corresponding to a 1-inch (2.54-cm) width at finish film) using a conventional control scheme using an EDI brand die (available from Nordson Extrusion Dies Industries LLC, Chippewa Falls, WI) with a 38-inch (965.2-mm) wide slot using thermal bolts spaced at 1.125 inches (31.115 mm). FIG. 12 shows the extruded web thickness profile for the hybrid die with a 965-mm wide slot with 16 primary actuators at 60-mm spacing each equipped with forks comprising 6 x 10mm spaced secondary actuators as tines within the provided hybrid control scheme. These data were collected over the course of manufacturing an entire roll of extruded web. The central line shows the average thickness and the dashed lines show the boundaries of two standard deviations (i.e., $\pm 2s$) from the average web thickness.

The data in FIG. 12 was generally collected initially using the method described in workflow 150 of FIG. 5, where the primary actuators were adjusted while keeping the secondary actuators passive, then transitioning to the dual-control loop workflow 250 of FIG. 6 while converging toward a steady-state operation. As can be visualized in these charts, the envelope of web thickness values is significantly narrower when using the provided hybrid actuator control methods compared with conventional methods.

The techniques described in this disclosure may be implemented, at least in part, in hardware, software, firmware or any combination thereof. For example, various examples of the techniques may be implemented within one or more microprocessors, digital signal processors (DSPs), application specific integrated circuits (ASICs), field programmable gate arrays (FPGAs), or any other equivalent integrated or discrete logic circuitry, as well as any combinations of such components, embodied in controllers, user interfaces or other devices. The term "controller" may generally refer to any of the foregoing logic circuitry, alone or in combination with other logic circuitry, or any other equivalent circuitry.

When implemented in software, the functionality ascribed to the systems and controllers described in this disclosure may be embodied as instructions on a computer-readable storage medium such as random access memory (RAM), read-only memory (ROM), non-volatile random access memory (NVRAM), electrically erasable programmable read-only memory (EEPROM), FLASH memory, magnetic media, optical media, or the like. The instructions may be executed to cause one or more processors to support one or more examples of the functionality described in this disclosure.

Various examples have been described in the foregoing passages. These and other examples are within the scope of the claims provided herein.

All cited references, patents, and patent applications in the above application for letters patent are herein incorporated by reference in their entirety in a consistent manner. In the event of inconsistencies or contradictions between portions of the incorporated references and this application, the information in the preceding description shall control. The preceding description, given in order to enable one of ordinary skill in the art to practice the claimed disclosure, is not to be construed as limiting the scope of the disclosure, which is defined by the claims and all equivalents thereto.

**Claims**

1. A method of adjusting a slot die comprising:

   an applicator slot extending across a width of the slot die, the applicator slot in fluid communication with a fluid flow path through the slot die;
   an adjustment mechanism comprising a slot die surface; and
   a plurality of primary actuators spaced along the width of the slot die, wherein each primary actuator is operatively coupled to one or more secondary actuators, and each secondary actuator is operatively coupled to the adjustment mechanism to adjust a cross-sectional height of fluid flow path at its respective location to provide a local adjustment of fluid flow through the applicator slot,
   wherein the method comprises:

   determining a target slot height profile;
   predicting, with a controller, a set of primary actuator settings and a set of secondary actuator settings based on the target slot height profile; and
   separately positioning each primary and secondary actuator according to the predicted set of primary and secondary actuator settings to adjust the slot die.

2. The method of claim 1, wherein the primary and secondary actuators collectively comprise a fork having a plurality of tines, and further wherein each tine is individually controllable.

3. The method of claim 2, wherein each primary actuator comprises a body portion of the fork, and a mechanical, piezoelectric, hydraulic, or pneumatic device capable of driving the body portion.

4. The method of any one of claims 1-3, wherein positioning each primary and secondary actuator comprises:

   determining a position of a primary actuator based on a respective target primary actuator position; and
   determining a position of each secondary actuator corresponding to the primary actuator based at least in part on the target primary actuator position.

5. The method of claim 4, wherein the target primary actuator position is determined to reduce variation of a length control signal amongst the secondary actuators.

6. The method of claim 5, wherein the length control signal comprises temperature, power, piezoelectric voltage, or hydraulic pressure.

7. The method of any one of claims 4-6, wherein the method is executed iteratively according to a control loop to progressively improve the positioning of each primary and secondary actuator.

8. The method of claim 7, wherein the control loop comprises:

an inner loop based on a first web thickness profile measured at a first location of an extruded web, wherein the target slot height profile is held constant for at least some iterations of the inner loop; and
an outer loop based on a second web thickness profile measured at a second location of the extruded web, the second location downstream from the first location, wherein the target slot height profile is updated at each iteration of the outer loop.

9. The method of claim 8, further comprising conveying the extruded web between the first and second locations.

10. The method of any one of claims 7-9, wherein the positioning of primary and secondary actuators occurs simultaneously in each iteration of the control loop.

11. A system comprising:

a slot die, wherein the slot die comprises:

an applicator slot extending across a width of the slot die, wherein the applicator slot is in fluid communication with a fluid flow path through the slot die;
an adjustment mechanism comprising a slot die surface for adjusting a cross-sectional height of fluid flow path through the applicator slot; and
a plurality of primary actuators spaced along the width of the slot die surface, wherein each primary actuator is operatively coupled to one or more secondary actuators, and each secondary actuator is operatively coupled to the adjustment mechanism to adjust a cross-sectional height of fluid flow path at its respective location to provide a local adjustment of fluid flow through the applicator slot; and

a controller capable of setting a position of each primary and each secondary actuator independently.

12. The system of claim 11, wherein the primary and secondary actuators collectively comprise a fork having a plurality of tines, and each primary actuator comprising a body portion of the fork and each secondary actuator comprising a tine.

13. The system of claim 12, wherein the position of the body portion is assisted by a positional sensor comprising a linear voltage displacement transducer, digital scale, capacitance gauge, optical displacement gauge, laser displacement gauge, or combination thereof.

14. The system of any one of claims 12 or 13, wherein the fork has three or more tines.

15. The system of any one of claims 12-14, wherein the slot die further comprises a mounting bracket, wherein each body portion extends through the mounting bracket to reduce deflection of the body portion.

**Patentansprüche**

1. Ein Verfahren zum Anpassen einer Schlitzdüse, aufweisend:

einen Applikatorschlitz, der sich über eine Breite der Schlitzdüse erstreckt, wobei der Applikatorschlitz mit einem Fluidströmungsweg durch die Schlitzdüse in Fluidverbindung steht;
einen Anpassungsmechanismus, aufweisend eine Schlitzdüsenoberfläche; und
eine Vielzahl von primären Aktuatoren, die entlang der Breite der Schlitzdüse beabstandet sind, wobei jeder primäre Aktuator mit einem oder mehreren sekundären Aktuatoren wirkgekoppelt ist, und jeder sekundäre Aktuator mit dem Anpassungsmechanismus wirkgekoppelt ist, um eine Querschnittshöhe des Fluidströmungswegs an seiner jeweiligen Stelle anzupassen, um eine lokale Anpassung von Fluidströmung durch den Applikatorschlitz bereitzustellen,

wobei das Verfahren Folgendes umfasst:

Bestimmen eines Zielschlitzhöhenprofils;
Vorhersagen, mit einer Steuerung, eines Satzes von primären Aktuatoreinstellungen und eines Satzes von sekundären Aktuatoreinstellungen, basierend auf dem Zielschlitzhöhenprofil; und
separates Positionieren jedes primären und sekundären Aktuators gemäß dem vorhergesagten Satz von primären und sekundären Aktuatoreinstellungen, um die Schlitzdüse anzupassen.

2. Das Verfahren nach Anspruch 1, wobei der primäre und der sekundäre Aktuator zusammen eine Gabel aufweisen, die eine Mehrzahl von Zinken aufweist, und ferner wobei jeder Zinken einzeln steuerbar ist.

3. Das Verfahren nach Anspruch 2, wobei jeder primäre Aktuator einen Körperabschnitt der Gabel und eine mechanische, piezoelektrische, hydraulische oder pneumatische Vorrichtung aufweist, die in der Lage ist, den Körperabschnitt anzutreiben.

4. Das Verfahren nach einem der Ansprüche 1 bis 3, wobei das Positionieren jedes primären und sekundären Aktuators aufweist:

Bestimmen einer Position eines primären Aktuators basierend auf einer jeweiligen Zielposition des primären Aktuators; und
Bestimmen einer Position jedes sekundären Aktuators, die dem primären Aktuator entspricht, mindestens teilweise basierend auf der Zielposition des primären Aktuators.

5. Das Verfahren nach Anspruch 4, wobei die Zielposition des primären Aktuators bestimmt wird, um die Variation eines Längensteuersignals zwischen den sekundären Aktuatoren zu verringern.

6. Das Verfahren nach Anspruch 5, wobei das Längensteuersignal Temperatur, Leistung, piezoelektrische Spannung oder hydraulischen Druck aufweist.

7. Das Verfahren nach einem der Ansprüche 4 bis 6, wobei das Verfahren iterativ gemäß einer Steuerschleife ausgeführt wird, um die Positionierung jedes primären und sekundären Aktuators schrittweise zu verbessern.

8. Das Verfahren nach Anspruch 7, wobei die Steuerschleife aufweist:

eine innere Schleife basierend auf einem ersten Bahndickenprofil, gemessen an einer ersten Stelle einer extrudierten Bahn, wobei das Zielschlitzhöhenprofil für mindestens einige Iterationen der inneren Schleife konstant gehalten wird; und
eine äußere Schleife basierend auf einem zweiten Bahndickenprofil, gemessen an einer zweiten Stelle der extrudierten Bahn, wobei die zweite Stelle stromabwärts von der ersten Stelle ist, wobei das Zielschlitzhöhenprofil bei jeder Iteration der äußeren Schleife aktualisiert wird.

9. Das Verfahren nach Anspruch 8, ferner aufweisend das Fördern der extrudierten Bahn zwischen dem ersten und dem zweiten Ort.

10. Das Verfahren nach einem der Ansprüche 7 bis 9, wobei die Positionierung der primären und sekundären Aktuatoren in jeder Iteration der Steuerschleife gleichzeitig erfolgt.

11. Ein System, aufweisend:
eine Schlitzdüse, wobei die Schlitzdüse aufweist:

einen Applikatorschlitz, der sich über eine Breite der Schlitzdüse erstreckt, wobei der Applikatorschlitz mit einem Fluidströmungsweg durch die Schlitzdüse in Fluidverbindung steht;
einen Anpassungsmechanismus, aufweisend eine Schlitzdüsenoberfläche zum Anpassen einer Querschnittshöhe eines Fluidströmungswegs durch den Applikatorschlitz; und
eine Vielzahl von primären Aktuatoren, die entlang der Breite der Schlitzdüse beabstandet sind, wobei jeder primäre Aktuator mit einem oder mehreren sekundären Aktuatoren wirkgekoppelt ist, und jeder sekundäre Aktuator mit dem Anpassungsmechanismus wirkgekoppelt ist, um eine Querschnittshöhe des Fluidströmungswegs an seiner jeweiligen Stelle anzupassen, um eine lokale Anpassung des Fluidströmungswegs durch den Applikatorschlitz bereitzustellen; und

eine Steuerung, die in der Lage ist, eine Position jedes primären und jedes sekundären Aktuators unabhängig voneinander einzustellen.

12. Das System nach Anspruch 11, wobei die primären und sekundären Aktuatoren gemeinsam eine Gabel mit einer Vielzahl von Zinken aufweisen und jeder primäre Aktuator aufweisend einen Körperabschnitt der Gabel und jeder sekundäre Aktuator einen Zinken.

13. Das System nach Anspruch 12, wobei die Position des Körperabschnitts durch einen Positionssensor unterstützt wird, aufweisend einen linearen Spannungsverschiebungswandler, eine digitale Waage, ein Kapazitätsmessgerät, ein optisches Verschiebungsmessgerät, ein Laserverschiebungsmessgerät oder eine Kombination davon.

14. Das System gemäß einem der Ansprüche 12 oder 13, wobei die Gabel drei oder mehr Zinken aufweist.

15. Das System nach einem der Ansprüche 12 bis 14, wobei die Schlitzdüse ferner eine Montagehalterung aufweist, wobei sich jeder Körperabschnitt durch die Montagehalterung erstreckt, um eine Ablenkung des Körperabschnitts zu verringern.

## Revendications

1. Procédé d'ajustement d'une matrice de fente comprenant :

une fente d'applicateur s'étendant sur une largeur de la matrice de fente, la fente d'applicateur étant en communication fluidique avec un chemin d'écoulement de fluide à travers la matrice de fente ;
un mécanisme d'ajustement comprenant une surface de matrice de fente ; et
une pluralité d'actionneurs primaires espacés le long de la largeur de la matrice de fente, dans lequel chaque actionneur primaire est accouplé de manière opérationnelle à un ou plusieurs actionneurs secondaires, et chaque actionneur secondaire est accouplé de manière opérationnelle au mécanisme d'ajustement pour ajuster une hauteur de section transversale de chemin d'écoulement de fluide au niveau de son emplacement respectif pour fournir un ajustement local de l'écoulement de fluide à travers la fente d'applicateur,
dans lequel le procédé comprend :

la détermination d'un profil de hauteur de fente cible ;
la prédiction, à l'aide d'un contrôleur, d'un ensemble de réglages d'actionneur primaire et un ensemble de réglages d'actionneur secondaire en fonction du profil de hauteur de fente cible ; et
le positionnement séparément de chaque actionneur primaire et secondaire selon l'ensemble prédit de réglages d'actionneurs primaires et secondaires pour ajuster la matrice de fente.

2. Procédé selon la revendication 1, dans lequel les actionneurs primaires et secondaires comprennent collectivement une fourche ayant une pluralité de dents, et dans lequel chaque dent est en outre contrôlable individuellement.

3. Procédé selon la revendication 2, dans lequel chaque actionneur primaire comprend une partie de corps de la fourche, et un dispositif mécanique, piézoélectrique, hydraulique ou pneumatique capable d'entraîner la partie de corps.

4. Procédé selon l'une quelconque des revendications 1 à 3, dans lequel le positionnement de chaque actionneur primaire et secondaire comprend :

la détermination d'une position d'un actionneur primaire en fonction d'une position cible de l'actionneur primaire respective ; et
la détermination d'une position de chaque actionneur secondaire correspondant à l'actionneur primaire en fonction, au moins en partie, de la position cible de l'actionneur primaire.

5. Procédé selon la revendication 4, dans lequel la position cible de l'actionneur primaire est déterminée pour réduire la variation d'un signal de contrôle de longueur parmi les actionneurs secondaires.

**6.** Procédé selon la revendication 5, dans lequel le signal de contrôle de longueur comprend la température, la puissance, la tension piézoélectrique ou la pression hydraulique.

**7.** Procédé selon l'une quelconque des revendications 4 à 6, dans lequel le procédé est exécuté de manière itérative selon une boucle de contrôle pour améliorer progressivement le positionnement de chaque actionneur primaire et secondaire.

**8.** Procédé selon la revendication 7, dans lequel la boucle de contrôle comprend :

une boucle interne en fonction d'un premier profil d'épaisseur de bande mesuré au niveau d'un premier emplacement d'une bande extrudée, dans lequel le profil de hauteur de fente cible demeure constant pour au moins quelques itérations de la boucle interne ; et
une boucle externe en fonction d'un second profil d'épaisseur de bande mesuré au niveau d'un second emplacement de la bande extrudée, le second emplacement étant situé en aval du premier emplacement, dans lequel le profil de hauteur de fente cible est mis à jour à chaque itération de la boucle externe.

**9.** Procédé selon la revendication 8, comprenant en outre le transport de la bande extrudée entre les premier et second emplacements.

**10.** Procédé selon l'une quelconque des revendications 7 à 9, dans lequel le positionnement des actionneurs primaires et secondaires se produit simultanément dans chaque itération de la boucle de contrôle.

**11.** Système comprenant :
une matrice de fente, dans lequel la matrice de fente comprend :

une fente d'applicateur s'étendant sur une largeur de la matrice de fente, dans lequel la fente d'applicateur est en communication fluidique avec un chemin d'écoulement de fluide à travers la matrice de fente ;
un mécanisme d'ajustement comprenant une surface de matrice de fente pour l'ajustement d'une hauteur de section transversale de chemin d'écoulement de fluide à travers la fente d'applicateur ; et
une pluralité d'actionneurs primaires espacés le long de la largeur de la surface de matrice de fente, dans lequel chaque actionneur primaire est accouplé de manière opérationnelle à un ou plusieurs actionneurs secondaires, et chaque actionneur secondaire est accouplé de manière opérationnelle au mécanisme d'ajustement pour ajuster une hauteur de section transversale de chemin d'écoulement de fluide au niveau de son emplacement respectif pour fournir un ajustement local de l'écoulement de fluide à travers la fente d'applicateur ; et
un contrôleur capable de régler une position de chaque actionneur primaire et secondaire de manière indépendante.

**12.** Système selon la revendication 11, dans lequel les actionneurs primaires et secondaires comprennent collectivement une fourche ayant une pluralité de dents, et chaque actionneur primaire comprenant une partie de corps de la fourche et chaque actionneur secondaire comprenant une dent.

**13.** Système selon la revendication 12, dans lequel la position de la partie de corps est assistée par un capteur de position comprenant un transducteur de déplacement à tension linéaire, une balance numérique, une jauge de capacité, une jauge de déplacement optique, une jauge de déplacement laser ou leurs combinaisons.

**14.** Système selon l'une quelconque des revendications 12 ou 13, dans lequel la fourche a trois dents ou plus.

**15.** Système selon l'une quelconque des revendications 12 à 14, dans lequel la matrice de fente comprend en outre un support de montage, dans lequel chaque partie de corps s'étend à travers le support de montage pour réduire la déformation de la partie de corps.

FIG. 1

FIG. 2

*FIG. 3*

*FIG. 4*

150

152

Profile measurement
- as cast
- as converted

154

Web-to-die mapping

158

Initial target profile
- as cast
- as converted

156

Determine profile deviation

Current slot height

162

Determine slot height adjustment

160

164

Adjust actuators
- primary
- secondary

*FIG. 5*

250

266

Converted profile
measurement

268

Web-to-die mapping

252

Cast profile
measurement

254

Web-to-die mapping

258

Target cast profile
• initial
• updated

256

Determine profile
deviation

262

Current slot height

260

Determine slot
height adjustment

264

Adjust actuator
• primary
• secondary

*FIG. 6*

*FIG. 7*

*FIG. 8A*

108

Reference Line

112

Temp on Average

Temp on Average

Temp on Average

Temp on Average

*FIG. 8B*

*FIG. 9*

*FIG. 10*

EP 4 323 169 B1

*FIG. 11*

Prior Art

EP 4 323 169 B1

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO IB2020061685 A, Yapel
- WO IB2020061687 A, Yapel
- WO IB2020061688 A, Secor
- US 63122996, Secor
- US 5626888 A, Saenze
- WO 2012170713 A, Secor
- US 9700911 B, Nakano
- WO 2019219724 A, Colell